# EUROPEAN PATENT APPLICATION

(11) **EP 4 800 718 A1**
(43) Date of publication of application: **02.09.2026**
(21) Application number: 24882034.2
(22) Date of filing: 06.09.2024
(51) Int. Cl.: H01B 1/06, C01G 33/00, C01G 35/00, H01B 1/08, H01B 13/00, H01M 10/052, H01M 10/0562

(54) **ION CONDUCTOR, SECONDARY BATTERY, AND METHOD FOR MANUFACTURING ION CONDUCTOR**

(30) Priority: 25.10.2023 JP 2023183093
(71) Applicant: DENSO CORPORATION, Kariya-city, Aichi 448-8661 (JP); TOKYO UNIVERSITY OF SCIENCE FOUNDATION, Tokyo 162-8601 (JP)
(72) Inventor: ONODERA, Hitoshi, Kariya- city, Aichi 4488661 (JP); YOSHIDA, Shuhei, Kariya- city, Aichi 4488661 (JP); SHIMONISHI, Yuta, Kariya- city, Aichi 4488661 (JP); FUJIMOTO, Kenjiro, Tokyo 162-8601 (JP); AIMI, Akihisa, Tokyo 162-8601 (JP)
(74) Representative: TBK
(86) International application number: PCT/JP2024/031974
(87) International publication number: WO 2025/088917

(57) **Abstract**

In an ion conductor including cations, anions, and vacancies in a crystal, among the anions, an anion having a largest isotropic atomic displacement parameter has an isotropic atomic displacement parameter of 2 A² or more. The cations include conducting ions that are capable of migrating through the crystal and non-conducting ions that remain immobile in the crystal. At each of conduction sites through which the cations migrate, at least one of the conducting ions, the non-conducting ions, and the vacancies is present. A sum of occupancies of the conducting ions, the non-conducting ions, and the vacancies at the conduction sites is 100%, and at the conduction sites, the occupancy of the conducting ions is within a range of 10% to 70%, the occupancy of the non-conducting ions is within a range of 10% to 50%, and the occupancy of the vacancies is within a range of 8% to 50%.

## Description

### CROSS REFERENCE TO RELATED APPLICATION

This application is based on Japanese Patent Application No. 2023-183093 filed on October 25, 2023, the disclosure of which is incorporated herein by reference.

### TECHNICAL FIELD

The present disclosure relates to an ion conductor, a secondary battery, and a method for manufacturing an ion conductor.

### BACKGROUND ART

From the viewpoint of improving safety, an all-solid-state battery in which the entire battery is solidified using a solid electrolyte has recently attracted attention as a lithium ion battery not using an organic solvent as an electrolyte. Patent Document 1 proposes that a part of cations contained in a crystal structure of a solid electrolyte is substituted with cations having different ionic radii to improve ionic conductivity.

### PRIOR ART DOCUMENT

### PATENT DOCUMENT

Patent Document 1: JP 2012-224520 A

### SUMMARY

In the above conventional technique, however, the ionic conductivity is only improved from about 2×10⁻⁴ S/cm to about 7×10⁻⁴ S/cm, and sufficient improvement in ionic conductivity is not obtained.

In view of the above points, an object of the present disclosure is to improve the ionic conductivity of an ion conductor.

In order to achieve the above object, according to one aspect of the present disclosure, an ion conductor includes a plurality of cations, a plurality of anions, and vacancies in a crystal. Among the plurality of anions, an anion having a largest isotropic atomic displacement parameter has an isotropic atomic displacement parameter of 2 Å² or more. The plurality of cations includes conducting ions that are capable of migrating through the crystal and non-conducting ions that remain immobile in the crystal. At each of conduction sites through which the plurality of cations migrates, at least one of the conducting ions, the non-conducting ions, and the vacancies is present. A sum of occupancies of the conducting ions, the non-conducting ions, and the vacancies at the conduction sites is 100%. At the conduction sites, the occupancy of the conducting ions is within a range of 10% to 70%, the occupancy of the non-conducting ions is within a range of 10% to 50%, and the occupancy of the vacancies is within a range of 8% to 50%.

According to the present disclosure, the isotropic atomic displacement parameter of the anion having the largest isotropic atomic displacement parameter is 2 Å² or more, so that the activation energy for hopping of conducting ions between adjacent anions can be reduced. Furthermore, by adjusting the occupancies of the conducting ions, the non-conducting ions, and the vacancies at the cation conduction sites within specified ranges, the number of non-conducting ions bonded to the anions can be adjusted, thereby securing conduction pathways for the conducting ions. Thus, the ionic conductivity of the ion conductor of the present disclosure can be improved.

### BRIEF DESCRIPTION OF DRAWINGS

FIG. 1 is a cross-sectional view illustrating a configuration of a secondary battery according to an embodiment.
FIG. 2 is a view illustrating a crystal structure of a pyrochlore-type oxide.
FIG. 3 is a view for explaining isotropic atomic displacement parameters of anions contained in the pyrochlore-type oxide.
FIG. 4 is a view for explaining occupancies of conducting ions, non-conducting ions, and vacancies in the pyrochlore-type oxide.
FIG. 5 is a view illustrating a manufacturing process of the pyrochlore-type oxide.
FIG. 6 is a table for explaining ionic conductivities of ion conductors of Examples and Comparative Examples.

### DESCRIPTION OF EMBODIMENTS

Hereinafter, an embodiment in which an ion conductor of the present disclosure is applied to a solid electrolyte for a secondary battery will be described with reference to the drawings. A secondary battery 10 of the present embodiment is a lithium ion battery in which charging and discharging are performed by the movement of lithium ions between a negative electrode 12 and a positive electrode 14.

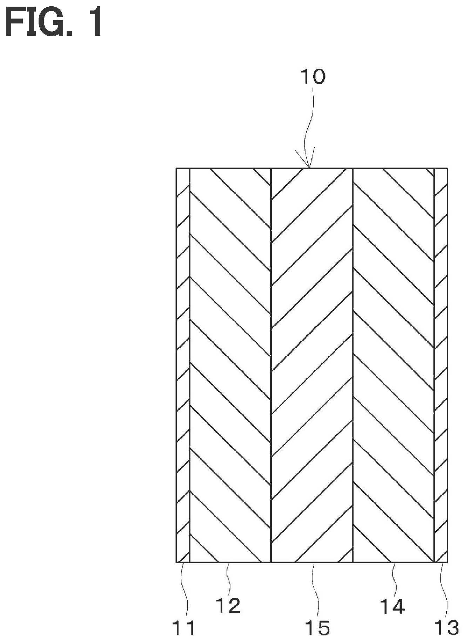

As illustrated in FIG. 1, the secondary battery 10 includes a negative electrode current collector 11, the negative electrode 12, a positive electrode current collector 13, the positive electrode 14, and a solid electrolyte 15.

The solid electrolyte 15 is sandwiched between the positive electrode 14 and the negative electrode 12. The negative electrode 12 and the solid electrolyte 15 are in contact with each other. The positive electrode 14 and the solid electrolyte 15 are in contact with each other. The negative electrode 12 and the positive electrode 14 are connected via the solid electrolyte 15. The secondary battery 10 of the present embodiment is a lithium ion battery in which charging and discharging are performed by the movement of lithium ions between the negative electrode 12 and the positive electrode 14 via the solid electrolyte 15.

A laminate including the negative electrode 12, the positive electrode 14, and the solid electrolyte 15 is provided between the negative electrode current collector 11 and the positive electrode current collector 13. The negative electrode current collector 11 and the negative electrode 12 are in contact with each other. The positive electrode current collector 13 and the positive electrode 14 are in contact with each other. The negative electrode current collector 11 and the positive electrode current collector 13 are connected via the laminate.

For the negative electrode current collector 11 and the positive electrode current collector 13, any material that can be used as a current collector for a lithium ion battery can be used. In the present embodiment, Cu is used as the negative electrode current collector 11, and Al is used as the positive electrode current collector 13.

As the negative electrode material constituting the negative electrode 12, any material that can be used as a negative electrode active substance for a lithium ion battery can be used, and for example, a carbon-based negative electrode material, an oxide-based negative electrode material, a metal-based negative electrode material, or the like can be used. In the present embodiment, a lithium-based negative electrode material or a Si-based negative electrode material is used.

As the positive electrode material constituting the positive electrode 14, any material that can be used as a positive electrode active substance for a lithium ion battery can be used. As the positive electrode 14, for example, a cobalt-based positive electrode material (LiCoO₂), a nickel-based positive electrode material (LiNiO₂), a manganese-based positive electrode material (LiMn₂O₄), an iron phosphate-based positive electrode material (LiFePO₄), a ternary positive electrode material mainly composed of nickel, manganese, and cobalt (LiNiₓMn_{y}Co_{z}O₂: NMC), or the like can be used.

The solid electrolyte 15 can move lithium ions between the negative electrode 12 and the positive electrode 14. That is, the solid electrolyte 15 is an ion conductor having a structure in which cations can conduct. In the present embodiment, a pyrochlore-type oxide having a pyrochlore-type crystal structure is used as the ion conductor constituting the solid electrolyte 15. The pyrochlore-type oxide may be entirely composed of only a crystal structure, or may be composed as a composite containing an amorphous structure in part of a crystal structure, like glass ceramics.

The pyrochlore-type oxide used as the ion conductor has a pyrochlore structure whose composition formula is represented by "Aa_{2-α}Ab_{(1+α)/3}B₂O_{7-β}X_{γ}". In the above composition formula, O represents an oxygen atom, and Aa, Ab, B, and X represent arbitrary elements or groups. Aa, Ab, and B are cations of different types from each other, and O and X are anions of different types from each other. The pyrochlore-type oxide contains a plurality of cations, a plurality of anions, and vacancies in the crystal. The plurality of cations includes conducting ions that are capable of migrating through the crystal and non-conducting ions that remain immobile in the crystal.

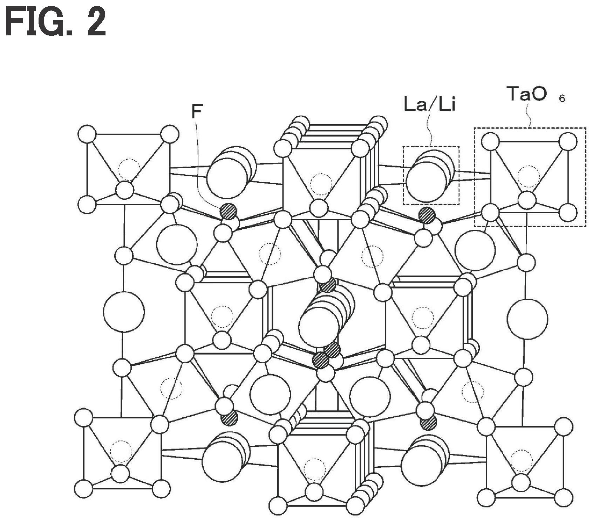

As illustrated in FIG. 2, the pyrochlore-type oxide has a crystal structure in which a three-dimensional network of BO₆ octahedra is formed. In BO₆, O is arranged at each apex with a cation B at the center, and the BO₆ shares an apex with the adjacent BO₆. In the three-dimensional network composed of BO₆, a hexagonal tunnel structure in which cations A and anions X are arranged is formed.

In the above composition formula, 0.6 < α < 2.0, 0 < β ≤ 1, and 0 < γ ≤ 1. When α changes, the composition ratio between Aa and Ab changes. When β changes, the composition ratio between O and X changes.

As the cation Aa, an alkali metal cation can be used. As the alkali metal represented by Aa, any one of Li, Na, K, Rb, and Cs can be used. As the cation Aa, Mg or H other than the alkali metals may be used. That is, the cation Aa contains at least one selected from the group consisting of Li, Na, K, Rb, Cs, Mg, and H. In the present embodiment, Li is used as Aa. The composition ratio (2-α) of Aa falls within the range of 0 < (2-α) < 1.4.

The cation Ab contains at least a lanthanoid. As the lanthanoid represented by Ab, at least one selected from the group consisting of La, Ce, Nd, and Sm can be used. In the present embodiment, La is used as Ab. The composition ratio (1+α)/3 of Ab falls within the range of 0.53 < (1+α)/3 < 1.

The basic configuration of the cation Ab includes the lanthanoid, and a part of the lanthanoid constituting Ab may be replaced by an alkaline earth metal (Ca, Mg, Sr, and the like). In the pyrochlore-type oxide of the present embodiment, it is considered that the inclusion of the lanthanoid in the pyrochlore structure satisfying 0.6 < α < 2.0, 0 < β ≤ 1, and 0 < γ ≤ 1 in the above composition formula causes a defect in the crystal structure, whereby the ionic conductivity value is improved. In the present embodiment, La is used as Ab.

In the pyrochlore-type oxide of the present embodiment, the cation A in the general composition formula: "A₂B₂O₇" is a composite cation using a lithium metal and the lanthanoid. This is considered to contribute to an improvement in the ionic conductivity value of the pyrochlore-type oxide.

The cation B is a metal cation different from Aa and Ab, and is a transition metal or a metal selected from Group 13 to Group 15 elements. B forms an octahedron coordinated by six oxygen atoms in the crystal. As the transition metal represented by B, a Group 4 transition metal or a Group 5 transition metal can be used. More specifically, at least one selected from the group consisting of Nb, Ta, Ti, Zr, Hf, and V can be used. Al, Ga, or In can be used as a Group 13 element represented by B, Ge or Sn can be used as a Group 14 element, and Sb or Bi can be used as a Group 15 element. In the present embodiment, Nb is used as B.

The anion X is an anion that can be substituted for the O atom constituting the pyrochlore structure. X is different from the O atom in electronegativity and polarizability. As the anion represented by X, at least one selected from the group consisting of O, F, Cl, Br, I, S, OH, and P can be used. The composition ratio γ of X is within the range of 0 < γ ≤ 1, and at least a part of the O atoms constituting the pyrochlore structure is replaced by X. In the present embodiment, F is used as X.

The pyrochlore-type oxide of the present embodiment has a defect structure in which lattice defects are included in the crystal with some of the O atoms constituting the pyrochlore structure replaced by anions having electronegativity and polarizability different from the O atoms. The pyrochlore-type oxide of the present embodiment is considered to have an improved ionic conductivity value because the pyrochlore structure includes the defect structure.

In the pyrochlore-type oxide of the present embodiment, Aa and Ab are partially missing in the defect structure. The composition formula of the general pyrochlore structure is "A₂B₂O₇", and the composition ratio of the cation A is 2. On the other hand, in the pyrochlore-type oxide of the present embodiment, the composition ratios of Aa and Ab are "2-α" and "(1+α)/3", respectively, and 0.6 < α < 2.0, so that the total of the composition ratios of Aa and Ab is less than 2. That is, in the crystal structure of the pyrochlore-type oxide of the present embodiment, at least a part of Aa or Ab is missing, thereby forming vacancies. The composition ratio corresponding to the missing portions (vacancies) of Aa and Ab is (2α-1)/3.

In the A site of the pyrochlore-type oxide of the present embodiment, at least one of the cation Aa, the cation Ab, and the vacancy is present. The A site of the pyrochlore-type oxide is a cation conduction site, the cation Aa is a conducting ion that is capable of migrating through the crystal, and the cation Ab is a non-conducting ion that remains immobile in the crystal.

In addition to the deviation of the composition ratio, a defect structure can also be formed by making the sum of the valences of the cations composed of Aa, Ab, and B and the anions composed of O and X negative in the above composition formula.

In addition, the pyrochlore-type oxide of the present embodiment is a composite anion compound containing a plurality of anions, such as O and X, in the pyrochlore structure, and the BO₆ octahedral coordination structure contains an anion represented by X, so that the alkali metal of Aa can be positioned at the center of the space with the BO₆ octahedral coordination without being close to the BO₆ octahedral coordination. Therefore, it is considered that the pyrochlore-type oxide of the present embodiment has high ion conduction when used under an applied electric field, as in a battery.

Since α, β, and γ in the above composition formula affect the lattice defects and the ionic conductivity, it is desirable to use it with α, β, and γ set to be within appropriate ranges. When the values of α, β, and γ are large, the concentration of the defects in the crystal lattice increases, but when the values exceed certain amounts, the concentration of the alkali metal represented by Aa decreases, and the ionic conductivity decreases. Therefore, it is desirable to control α within the range of 0.6 < α < 2.0, β within the range of 0 < β ≤ 1, and γ within the range of 0 < γ ≤ 1.

In the present embodiment, a pyrochlore-type oxide represented by "LiLa_{0.66}Ta₂O₆F" is used as the solid electrolyte 15. That is, Li is used as the cation Aa, La is used as the cation Ab, Ta is used as the cation B, F is used as the anion X, and α is set to 1, β to 1, and γ to 1. Hereinafter, "LiLa_{0.66}Ta₂O₆F" is also referred to as "LLTOF".

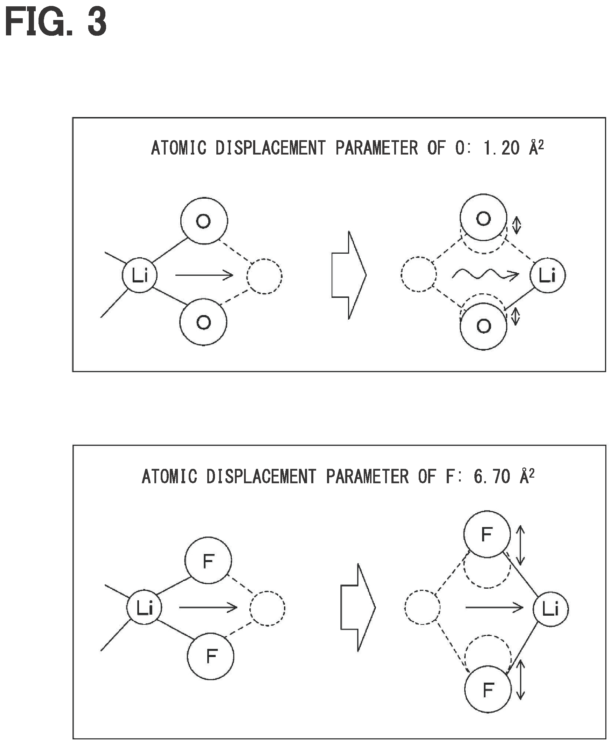

Next, isotropic atomic displacement parameters of the anions contained in the pyrochlore-type oxide of the present embodiment will be described with reference to FIG. 3. The isotropic atomic displacement parameter is an indicator of the mobility of atomic positions in the crystal.

The pyrochlore-type oxide of the present embodiment contains O and F as anions. The isotropic atomic displacement parameters of anions contained in the pyrochlore-type oxide have different values depending on the types of constituent elements, the proportions of constituent elements, and the like. In the example illustrated in FIG. 3, the isotropic atomic displacement parameter of O is 1.20 Å² and the isotropic atomic displacement parameter of F is 6.70 Å².

In a solid electrolyte such as a pyrochlore-type oxide, Li as a conducting ion diffuses by hopping occurring between cation conduction sites in the crystal. The smaller the activation energy for hopping, the higher the ionic conductivity.

When Li hops between adjacent anions as illustrated in FIG. 3, the displacement amount of the anion becomes larger as the isotropic atomic displacement parameter of the anion increases, whereby Li becomes more mobile. As a result, the activation energy for hopping is reduced, and the ionic conductivity is improved.

Therefore, it is desirable that, among the plurality of anions contained in the pyrochlore-type oxide, the isotropic atomic displacement parameter of at least an anion having a large isotropic atomic displacement parameter is 2 Å² or more. When the isotropic atomic displacement parameter of the anion is 2 Å² or more, the activation energy for hopping of Li is reduced, and an effect is obtained in which the ionic conductivity of the pyrochlore-type oxide is sufficiently improved. Furthermore, when the isotropic atomic displacement parameter of at least an anion having a large isotropic atomic displacement parameter is set to 5 Å² or more, an effect is obtained in which the ionic conductivity of the pyrochlore-type oxide is further improved.

It is also desirable that, in the plurality of anions contained in the pyrochlore-type oxide, the ratio of the isotropic atomic displacement parameter of an anion having the largest isotropic atomic displacement parameter to the isotropic atomic displacement parameter of an anion having the smallest isotropic atomic displacement parameter is set to 4 or more. When the ratio of the isotropic atomic displacement parameter of an anion having the largest isotropic atomic displacement parameter to the isotropic atomic displacement parameter of an anion having the smallest isotropic atomic displacement parameter is 4 or more, an effect is obtained in which the ionic conductivity of the pyrochlore-type oxide is sufficiently improved.

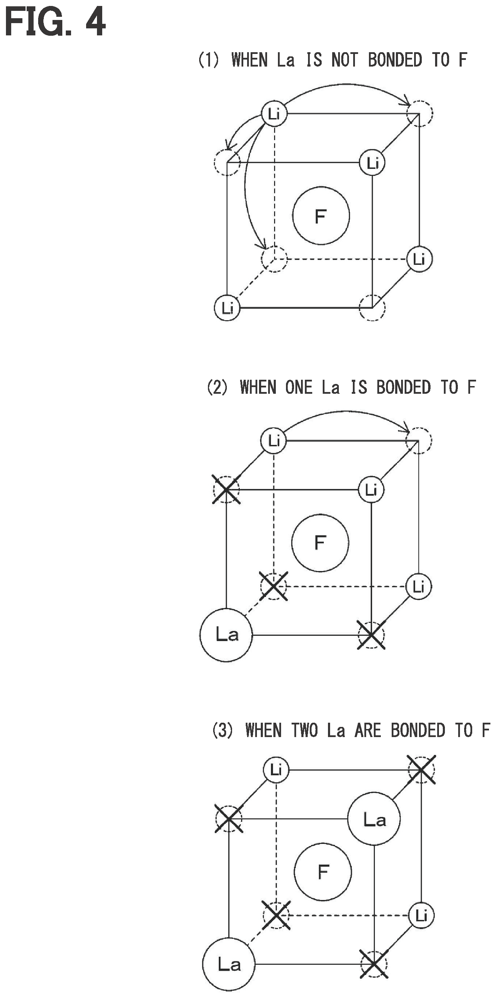

Next, occupancies of conducting ions, non-conducting ions, and vacancies in the pyrochlore-type oxide will be described with reference to FIG. 4. FIG. 4 illustrates cation conduction sites centered on an anion F in the crystal of the pyrochlore-type oxide.

In FIG. 4, the vertices of the octahedron centered on F serve as Li conduction sites through which Li can diffuse. At the Li conduction site, any one of Li as a conducting ion, La as a non-conducting ion, or a vacancy is present. In FIG. 4, a solid circle represents Li or La, and a broken circle represents a vacancy.

In FIG. 4, vacancies not marked with × are metastable Li positions, and Li present at an adjacent Li conduction site can move there. The Li conduction site after Li has left becomes a vacancy, and Li can move there from the Li conduction site adjacent to the vacancy.

In FIG. 4, (1) illustrates a case where La is not bonded to F, (2) illustrates a case where one La is bonded to F, and (3) illustrates a case where two La are bonded to F. In FIG. 4, the arrows indicate conduction pathways for Li present at the back left in the drawing.

As illustrated in (1) in FIG. 4, when La is not bonded to F, many metastable positions are present around Li, and many Li conduction pathways are present.

According to the study of the present inventors, it has been found that when La is present at a Li conduction site, a metastable position adjacent to La disappears. That is, as the number of La bonded to F increases, Li conduction pathways decrease, leading to a decrease in ionic conductivity.

As illustrated in (2) in FIG. 4, when one La is bonded to F, three metastable positions adjacent to La disappear, leading to a decrease in Li conduction pathways. Furthermore, when two La are bonded to F, all the metastable positions adjacent to F disappear, as illustrated in (3) in FIG. 4. That is, when two or more La are bonded to one F, the F cannot contribute to Li conduction.

In the pyrochlore-type oxide, when the content ratio of La in the composition is too large, the ionic conductivity decreases. On the other hand, in the pyrochlore-type oxide, it is necessary to contain a predetermined proportion of La in order to satisfy electrical neutrality and stably maintain the crystal structure while containing vacancies in the structure for ion conduction. Therefore, in order to obtain good ion conduction in the pyrochlore-type oxide, it is necessary to adjust the occupancy of conducting ions, the occupancy of non-conducting ions, and the occupancy of vacancies at the Li conduction site in the crystal to appropriate ratios, respectively.

In the composition of the pyrochlore-type oxide in the present embodiment, when the sum of the occupancies of conducting ions, non-conducting ions, and vacancies at the Li conduction site is set to 100%, the occupancy of conducting ions is set to be within the range of 10% to 70%, the occupancy of non-conducting ions is to be within the range of 10% to 50%, and the occupancy of vacancies is set to be within the range of 8% to 50%. When the occupancies of conducting ions, non-conducting ions, and vacancies at the Li conduction site satisfy the above numerical ranges, respectively, the number of non-conducting ions bonded to an anion can be adjusted, thereby securing the conduction pathways for conducting ions.

The isotropic atomic displacement parameters and occupancies described above can be obtained by X-ray diffraction measurement and Rietveld analysis. The initial values of the isotropic atomic displacement parameters and fractional coordinates of the respective elements of Aa_{2-α}Ab_{(1+α)/3}B₂O_{7-β}X_{γ}, and the initial values of the occupancies are taken from the values reported in the reference [Cyrille Galven et al., Eur. J. Inorg. Chem., 33, pp. 5272-5283 (2010)]. Aa, Ab, B, and X correspond to La, Li, Nb, and F in the reference, respectively. As the initial values of the occupancies, those of Ab and B are set to the mixing ratios of the raw materials, while those of O and F are set to 6 and 1, respectively. The initial value of the occupancy of Aa is set to a value that satisfies charge compensation. It is desirable that the X-ray diffraction measurements are performed by the Debye-Scherrer method using synchrotron radiation X-rays. When the Debye-Scherrer method is used, X-ray absorption correction is performed.

In the Rietveld analysis, refinement of the scale factor, background parameters, shift parameters, profile parameters, and lattice constants is performed prior to refinement of the fractional coordinates, isotropic atomic displacement parameters, and occupancies. This refinement process may be performed in multiple stages as appropriate. Subsequently, the occupancies are refined. Thereafter, the occupancies of Aa, Ab, and X are refined one by one in sequence. Thereafter, the occupancies are fixed, and refinement of the isotropic atomic displacement parameters of O and X is performed.

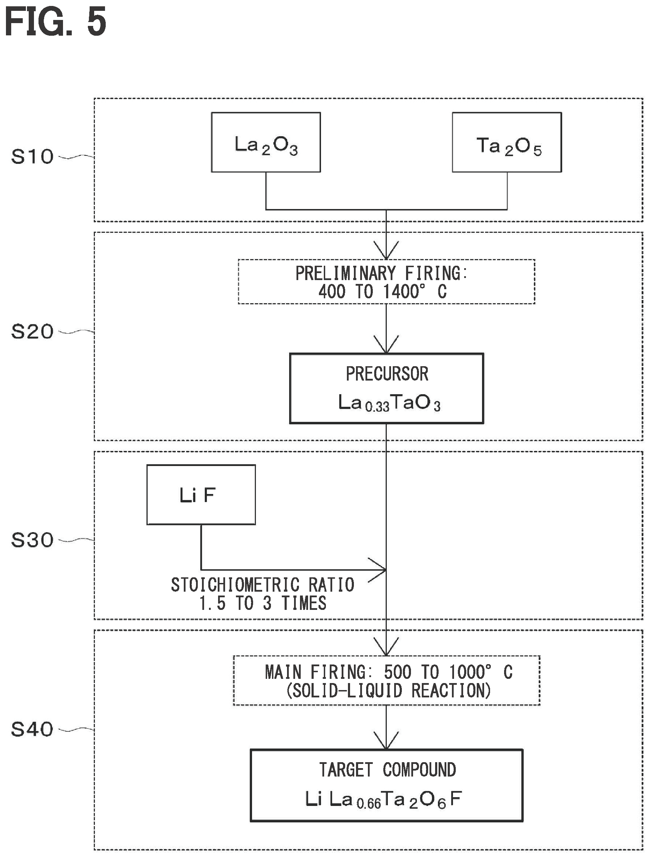

Next, a method for manufacturing the solid electrolyte 15 of the present embodiment will be described with reference to FIG. 5. In the method for manufacturing the solid electrolyte 15, a first mixing process S10, a first firing process S20, a second mixing process S30, and a second firing process S40 are sequentially performed. The second mixing process S30 and the second firing process S40 correspond to the mixing process and the firing process.

### (First Mixing Process)

In the first mixing process S10, a plurality of raw materials respectively containing a plurality of cations to be contained in the target compound LLTOF are mixed to obtain a mixture. The plurality of raw materials mixed in the first mixing process S10 contain a lanthanum source and a tantalum source. The lanthanum source is a raw material of the cation Ab, and the tantalum source is a raw material of the cation B. As the lanthanum source and the tantalum source, oxides, carbonates, fluorides, acetates, chlorides, hydroxides, and the like can be used. In the present embodiment, La₂O₃ is used as the lanthanum source, and Ta₂O₅ is used as the tantalum source. In the first mixing process, particles of La₂O₃ and Ta₂O₅ are mixed at a predetermined ratio.

### (First Firing Process)

Next, the first firing process S20 of firing the mixture of La₂O₃ and Ta₂O₅ is performed. The first firing process S20 can be regarded as a preliminary firing process. In the first firing process S20, the mixture is heated in an air atmosphere or an inert atmosphere to fire a precursor La_{0.33}TaO₃.

The heating time in the first firing process S20 is desirably set to 1 to 20 hours, and more desirably set to 5 to 10 hours. The heating temperature in the first firing process S20 is desirably set to be within the range of 400°C to 1400°C, and more desirably set to be within the range of 500°C to 800°C.

In the first firing process S20, a solid-state reaction is performed in which La₂O₃ and Ta₂O₅ react while remaining in the solid state. By the first firing process S20, La_{0.33}TaO₃ is generated as a precursor of the target compound. In the first firing process, La₂O₃ and Ta₂O₅, which are raw materials, may remain in an unreacted state in addition to La_{0.33}TaO₃, which is the precursor.

The precursor La_{0.33}TaO₃ is a perovskite-type oxide. The precursor La_{0.33}TaO₃ is a composite oxide containing a plurality of cations, and contains at least cations other than alkali metal cations. The precursor of the present embodiment does not contain an alkali metal cation (Li in the present embodiment) corresponding to the cation Aa, but contains La as the cation Ab and Ta as the cation B. That is, the precursor La_{0.33}TaO₃ is a composite oxide containing at least a plurality of cations Ab and B other than the alkali metal cation Aa in the composition.

The precursor basically contains no alkali metal cation, but may contain a trace amount of alkali metal cation. When the precursor contains alkali metal cations, the composition ratio of the alkali metal cations in the precursor is less than the composition ratio of the alkali metal cations in LiF.

### (Second Mixing Process)

Next, a second mixing process S30 is performed in which a lithium source and a fluorine source as raw materials of the target compound LLTOF are prepared and they are mixed with the precursor La_{0.33}TaO₃ to obtain a mixture. The lithium source is a raw material of the cation Aa, and the fluorine source is a raw material of the anion X. As the lithium source, oxides, carbonates, fluorides, acetates, chlorides, hydroxides, and the like can be used. In the present embodiment, LiF is used as the lithium source and the fluorine source. LiF is an alkali metal compound containing alkali metal cations.

In the second mixing process, LiF is mixed with the precursor La_{0.33}TaO₃ at a predetermined ratio to obtain a mixture. The mixture contains LiF in an amount exceeding the stoichiometric ratio (molar ratio) relative to the target compound LLTOF. That is, the mixture contains an excessive amount of LiF relative to the target compound. Therefore, in the second firing process performed after the second mixing process, LiF melts to form a liquid phase, and a solid-liquid reaction occurs between the liquid LiF and solid La_{0.33}TaO₃. The stoichiometric ratio is defined as the ratio of the number of moles of LiF, which is a reactant, to the number of moles of LLTOF, which is the target compound.

The amount of LiF is desirably set within the range of 1.5 to 3 times the stoichiometric ratio (molar ratio) relative to the target compound. If the amount of LiF is too small, the amount of the liquid LiF becomes insufficient due to a decrease in LiF accompanying the progress of the reaction in the second firing process, and there is a risk that the solid-liquid reaction cannot be maintained. Therefore, the amount of LiF is desirably 1.5 times or more the stoichiometric ratio. If the amount of LiF is too large, a large amount of LiF remains when the target compound is generated, and the amount of impurities increases. Furthermore, if the amount of LiF is too large, the composition of the product tends to deviate from that of the target compound LLTOF. Therefore, the amount of LiF is desirably three times or less the stoichiometric ratio. In the present embodiment, the amount of LiF is set to twice the stoichiometric ratio relative to the target compound.

### (Second Firing Process)

Next, the second firing process S40 is performed in which the mixture of the precursor La_{0.33}TaO₃ and the lithium source LiF is fired. The second firing process S40 can be regarded as a main firing process. In the second firing process S40, the mixture of La_{0.33}TaO₃ and LiF is heated at a predetermined temperature in an air atmosphere or an inert atmosphere to fire the target compound LLTOF.

In the second firing process S40, LiF melts and forms a liquid phase when heated. That is, in the second firing process S40, the target compound LLTOF is generated through a solid-liquid reaction between the liquid LiF and the solid La_{0.33}TaO₃.

The mixture contains an excess amount of LiF relative to the target compound. Therefore, even when LiF decreases accompanying the progress of the reaction, it is possible to secure a sufficient amount of the liquid LiF for the solid-liquid reaction.

The heating time in the second firing process S40 is desirably set to 1 to 20 hours, and more desirably set to 1 to 10 hours. The heating temperature in the second firing process S40 is desirably set to be within the range of 500°C to 1000°C, and more desirably set to be within the range of 650°C to 850°C.

In the second firing process S40, firing at a high temperature increases the particle size of the product, and thus it is desirable to lower the heating temperature in order to reduce the particle size of the product. Furthermore, if firing is performed at a high temperature, Li and F are likely to volatilize, and the composition of the product tends to deviate from that of the target compound LLTOF. Therefore, the heating temperature in the second firing process S40 is desirably set to 1000°C or lower, and more desirably set to 850°C or lower.

In addition, if the heating temperature in the second firing process S40 is too low, the reactivity decreases and the reaction rate becomes slower, resulting in a longer time required for the generation of the pyrochlore-type oxide. Therefore, in order to suppress the reaction rate from becoming slower, the heating temperature in the second firing process S40 is desirably set to 500°C or higher, and more desirably set to 650°C or higher.

In the second firing process S40, a eutectic reaction occurs between La_{0.33}TaO₃ and LiF. Since the precursor La_{0.33}TaO₃ of the present embodiment does not contain Li, a eutectic reaction easily occurs with LiF.

Through the eutectic reaction, LiF melts at a temperature lower than its intrinsic melting point (848°C). Therefore, in the present embodiment, the heating temperature in the second firing process S40 is set to a temperature lower than the melting point of LiF (848°C). Specifically, the heating temperature in the second firing process S40 is set to 700°C.

In the second firing process S40, the target compound LLTOF is generated by firing La_{0.33}TaO₃ and LiF. When impurities, such as LiF, remain in the product, the remaining impurities can be separated by washing with water or a solvent. In the second firing process S40, a solid-liquid reaction between the liquid LiF and the solid La_{0.33}TaO₃ allows the reaction to proceed at a lower temperature than in a solid-state reaction. Therefore, the particle size of LLTOF, which is a pyrochlore-type oxide, can be reduced.

Through the above processes, the crystal of a pyrochlore-type oxide represented by the composition formula "LiLa_{0.66}Ta₂O₆F" can be obtained. According to the manufacturing method of the present embodiment, it is possible to obtain a pyrochlore-type oxide satisfying the range of the isotropic atomic displacement parameter of the anion and the ranges of the occupancies of conducting ions, non-conducting ions, and vacancies described above.

By changing the mixing ratios of La₂O₃ and Ta₂O₅, as well as the mixing ratio of LiF, in the above manufacturing process, the crystal of a pyrochlore structure represented by the composition formula "Li_{2-α}La_{(1+α)/3}Ta₂O_{7-β}F_{γ}" can be obtained. By changing the mixing ratios of La₂O₃ and Ta₂O₅, as well as the mixing ratio of LiF, α, β, and γ of the composition formula can be adjusted. When the firing is performed, a part of the material is sublimated. Therefore, by changing the firing conditions, the firing furnace atmosphere, and the firing furnace size in the first firing process and the second firing process, α, β, and γ can also be adjusted.

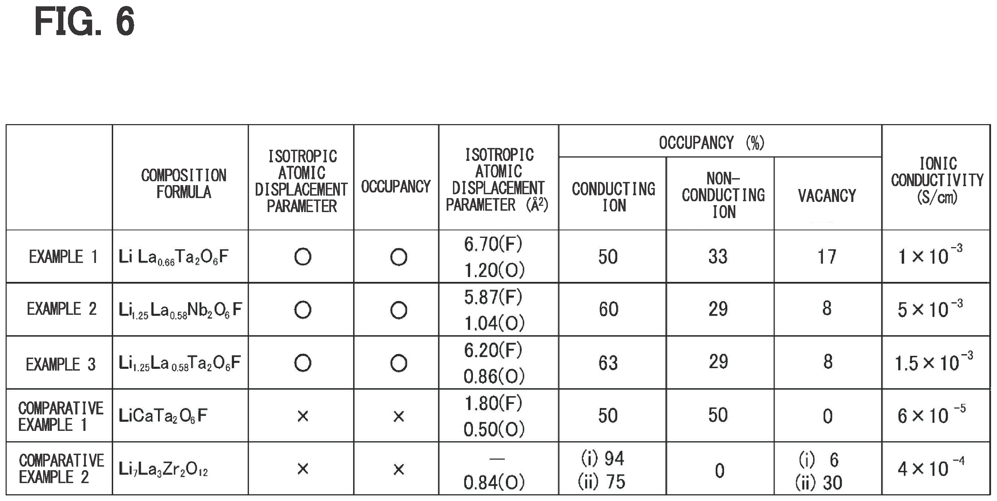

Next, the relationship among the isotropic atomic displacement parameter, the occupancies of conducting ions, non-conducting ions, and vacancies, and the ionic conductivity will be described using Examples and Comparative Examples shown in FIG. 6.

Examples 1 to 3 and Comparative Examples 1 and 2 are ion conductors of different oxide systems. Examples 1 to 3 and Comparative Example 1 are pyrochlore-type oxides, whereas Comparative Example 2 is a garnet-type oxide. Example 1 is LiLa_{0.66}Ta₂O₆F, Example 2 is Li_{1.25}La_{0.58}Nb₂O₆F, Example 3 is Li_{1.25}La_{0.58}Ta₂O₆F, Comparative Example 1 is LiCaTaO₆F, and Comparative Example 2 is Li₇La₃Zr₂O₁₂. The conducting ions in Examples 1 to 3 and Comparative Examples 1 and 2 are Li, the non-conducting ions in Examples 1 to 3 and Comparative Example 2 are La, and the non-conducting ion in Comparative Example 1 is Ca. Comparative Example 2 contains only O as an anion. In Comparative Example 2, two types of cation conduction sites are present, and in FIG. 6, each cation conduction site is denoted as (i) and (ii) in the column showing the occupancies of conducting ions and vacancies.

The isotropic atomic displacement parameters and the occupancies of conducting ions, non-conducting ions, and vacancies in Examples 1 to 3 and Comparative Examples 1 and 2 were obtained by the X-ray diffraction measurement and Rietveld analysis described above. In the X-ray diffraction measurement, when the wavelength of the synchrotron radiation X-rays is set to 0.068 nm and the inner diameter of the sample capillary is set to be 0.18 mm, the product X_{µR}, defined as the product of the linear absorption coefficient of Li_{1.25}La_{0.58}Nb₂O₆F and the inner diameter of the capillary, is set to be 0.8. When the wavelength of the synchrotron radiation X-rays is set to 0.067 nm and the inner diameter of the sample capillary is set to be 0.18 mm, the product X_{µR}, defined as the product of the linear absorption coefficients of Li_{1.25}La_{0.58}Ta₂O₆F and LiLa_{0.66}Ta₂O₆F and the inner diameter of the capillary, is set to 1.7.

In the ion conductors of Comparative Examples 1 and 2, the isotropic atomic displacement parameter of the anion having the largest isotropic atomic displacement parameter (F in Comparative Example 1 and O in Comparative Example 2) is less than 2 Å², as shown in FIG. 6. On the other hand, in the ion conductors of Examples 1 to 3, the isotropic atomic displacement parameter of the anion (F) having the largest isotropic atomic displacement parameter is 2 Å² or more. Furthermore, in the ion conductors of Examples 1 to 3, the isotropic atomic displacement parameter of the anion (F) having the largest isotropic atomic displacement parameter is 5 Å² or more.

In addition, in the ion conductor of Comparative Example 1, the ratio of the isotropic atomic displacement parameter of the anion (F) having the larger isotropic atomic displacement parameter to the isotropic atomic displacement parameter of the anion (O) having the smaller isotropic atomic displacement parameter is less than 4. The ion conductor of Comparative Example 2 does not contain a plurality of anion species, and the ratio between the isotropic atomic displacement parameters is not obtained. On the other hand, in the ion conductors of Examples 1 to 3, the ratio of the isotropic atomic displacement parameter of the anion (F) having the larger isotropic atomic displacement parameter to the isotropic atomic displacement parameter of the anion (O) having the smaller isotropic atomic displacement parameter is 4 or more.

In the ion conductors of Examples 1 to 3, the occupancy ratios of conducting ions, non-conducting ions, and vacancies fall within the ranges of 10% to 70%, 10% to 50%, and 8% to 50%, respectively. On the other hand, the ion conductors of Comparative Examples 1 and 2 do not satisfy the above numerical ranges of the occupancy ratios of conducting ions, non-conducting ions, and vacancies.

The ion conductors of Examples 1 to 3 satisfy both the above ranges of the isotropic atomic displacement parameters and the ranges of the occupancy ratios of conducting ions, non-conducting ions, and vacancies. On the other hand, the ion conductors of Comparative Examples 1 and 2 satisfy neither the above ranges of the isotropic atomic displacement parameters nor the ranges of the occupancies of conducting ions, non-conducting ions, and vacancies.

As shown in FIG. 6, the ionic conductivities of the ion conductors of Examples 1 to 3 were 1×10⁻³ S/cm in Example 1, 5×10⁻³ S/cm in Example 2, and 1.5×10⁻³ S/cm in Example 3. On the other hand, the ionic conductivities of the ion conductors of Comparative Examples 1 and 2 were 6×10⁻⁵ S/cm in Comparative Example 1 and 4×10⁻⁴ S/cm in Comparative Example 2. That is, the ion conductors of Examples 1 to 3 exhibit ionic conductivities that are two orders of magnitude higher than the ion conductor of Comparative Example 1 and one order of magnitude higher than the ion conductor of Comparative Example 2.

The ionic conductivity of a pyrochlore-type oxide (Li_{1.25}La_{0.58}Nb₂O₆F) having the same composition as that of Example 2 manufactured by the solid-state reaction was 2×10⁻³ S/cm. When a pyrochlore-type oxide is manufactured by a solid-state reaction, it is necessary to perform firing at a high temperature of 1000°C or higher, and thus it is considered that a part of Li or F volatilizes during firing. Furthermore, impurities are easily caused in the pyrochlore-type oxide by firing at a high temperature.

On the other hand, a pyrochlore-type oxide is manufactured by a solid-liquid reaction in the present embodiment, and thus the pyrochlore-type oxide can be manufactured at a temperature lower than that in a solid-state reaction, and the pyrochlore-type oxide can satisfy the above ranges of the isotropic atomic displacement parameters and ranges of the occupancies of conducting ions, non-conducting ions, and vacancies. Therefore, it is considered that the ionic conductivity (5×10⁻³ S/cm) of the pyrochlore-type oxide of Example 2, which was manufactured by a solid-liquid reaction, was higher than the ionic conductivity (2×10⁻³ S/cm) of the pyrochlore-type oxide having the same composition, which was manufactured by a solid-state reaction.

In the ion conductor of the present embodiment described above, the isotropic atomic displacement parameter of the anion having the largest isotropic atomic displacement parameter is 2 Å² or more. As a result, the activation energy for hopping of conducting ions between adjacent anions can be reduced. Furthermore, at the cation conduction sites in the ion conductor of the present embodiment, the occupancy of conducting ions is within the range of 10% to 70%, the occupancy of non-conducting ions is within the range of 10% to 50%, and the occupancy of vacancies is within the range of 8% to 50%. As a result, the number of non-conducting ions bonded to an anion can be adjusted, and the conduction pathways for conducting ions can be secured.

According to the ion conductor satisfying the above conditions, a high ionic conductivity on the order of 10⁻³ S/cm can be obtained. By using such an ion conductor having a high ionic conductivity as the solid electrolyte 15 of the secondary battery 10, the power density of the secondary battery 10 can be improved.

In the present embodiment, a mixture of a composite oxide, which is a precursor of a pyrochlore-type oxide and does not contain an alkali metal compound, and an alkali metal compound in an amount exceeding the stoichiometric ratio relative to the pyrochlore-type oxide is heated and fired to produce the pyrochlore-type oxide. As a result, the alkali metal compound is liquefied, and the pyrochlore-type oxide can be produced through a solid-liquid reaction in which the liquid alkali metal compound and the solid composite oxide are reacted with each other. In the solid-liquid reaction, the pyrochlore-type oxide can be produced at a temperature lower than that in a solid-state reaction, and the firing temperature can be lowered. By such a manufacturing method, it is possible to obtain a pyrochlore-type oxide satisfying the above numerical ranges of the isotropic atomic displacement parameters and occupancies, and it is possible to improve the ionic conductivity of the pyrochlore-type oxide.

Furthermore, through a eutectic reaction between the solid composite oxide and the liquid alkali metal compound, the alkali metal compound melts at a temperature lower than its intrinsic melting point. Therefore, in the present embodiment, the firing temperature of the mixture of the composite oxide and the alkali metal compound is set to be lower than the melting point of the alkali metal compound. Since the alkali metal compound contained in the mixture melts at a temperature lower than its melting point through the eutectic reaction, the alkali metal compound can be melted to perform the solid-liquid reaction even when the firing temperature is set to be lower than the melting point of the alkali metal compound. As a result, the pyrochlore-type oxide can be produced at a lower firing temperature.

The present disclosure is not limited to the above-described embodiments, and can be variously modified as follows without departing from the gist of the present disclosure. The means disclosed in the above respective embodiments may be appropriately combined within a feasible range.

For example, in the above embodiment, the ion conductor of the present disclosure is applied to the solid electrolyte of a lithium ion battery, but the ion conductor of the present disclosure may be applied to different types of secondary batteries. Specifically, when K is used as the cation Aa of the ion conductor, the ion conductor can be used as a solid electrolyte for a potassium ion battery. When Na is used as the cation Aa of the ion conductor, the ion conductor can be used as a solid electrolyte for a sodium ion battery.

In the above embodiment, an example has been described in which the ion conductor of the present disclosure is applied to a pyrochlore-type oxide, but the ion conductor of the present disclosure can also be applied to ion conductors other than pyrochlore-type oxides.

The following shows features of the ion conductors, the secondary batteries, and the methods for manufacturing the ion conductors and the secondary batteries disclosed in the present specification.

### (Feature 1)

An ion conductor includes a plurality of cations, a plurality of anions, and vacancies in a crystal. Among the plurality of anions, an anion having a largest isotropic atomic displacement parameter has an isotropic atomic displacement parameter of 2 Å² or more. The plurality of cations includes conducting ions capable of migrating through the crystal and non-conducting ions that remain immobile in the crystal. At each of conduction sites through which the plurality of cations migrates, at least one of the conducting ions, the non-conducting ions, and the vacancies is present. A sum of occupancies of the conducting ions, the non-conducting ions, and the vacancies at the conduction sites is 100%. At the conduction sites, the occupancy of the conducting ions is within a range of 10% to 70%, the occupancy of the non-conducting ions is within a range of 10% to 50%, and the occupancy of the vacancies is within a range of 8% to 50%.

### (Feature 2)

In the ion conductor according to the feature 1, among the plurality of anions, the anion having the largest isotropic atomic displacement parameter has an isotropic atomic displacement parameter of 5 Å² or more.

### (Feature 3)

In the ion conductor according to the feature 1 or 2, in the plurality of anions, a ratio of the isotropic atomic displacement parameter of the anion having the largest isotropic atomic displacement parameter to an isotropic atomic displacement parameter of an anion having a smallest isotropic atomic displacement parameter is 4 or more.

### (Feature 4)

In the ion conductor according to any one of the features 1 to 3, elements constituting the plurality of anions include at least one selected from a group consisting of O, F, Cl, Br, I, S, OH, and P.

### (Feature 5)

In the ion conductor according to any one of the features 1 to 4, elements constituting the conducting ions include at least one selected from a group consisting of Li, Na, K, Rb, Cs, Mg, and H.

### (Feature 6)

The ion conductor according to any one of the features 1 to 5 has a pyrochlore-type crystal structure.

### (Feature 7)

A secondary battery includes a solid electrolyte (15) for the secondary battery including the ion conductor according to any one of the features 1 to 6, and a positive electrode (14) and a negative electrode (12) provided to sandwich the solid electrolyte for the secondary battery.

### (Feature 8)

A method for manufacturing the ion conductor according to any one of the features 1 to 6, in which the conducting ions are alkali metal cations, includes a mixing process (S30) of mixing a composite oxide containing at least cations other than the alkali metal cations with an alkali metal compound containing the alkali metal cations, and a firing process (S40) of heating a mixture containing the composite oxide and the alkali metal compound at a predetermined temperature to produce a pyrochlore-type oxide. In a case where the composite oxide contains the alkali metal cations, a composition ratio of the alkali metal cations in the composite oxide is less than a composition ratio of the alkali metal cations in the alkali metal compound. The mixture contains the alkali metal compound in an amount exceeding a stoichiometric ratio relative to the pyrochlore-type oxide. In the firing process, the alkali metal compound is liquefied by heating at the predetermined temperature.

Although the present disclosure has been described in accordance with examples, it is understood that the present disclosure is not limited to the examples and structures. The present disclosure also includes various modifications and variations within the equivalent range. In addition, although various combinations and forms are shown in the present disclosure, other combinations and forms including only one element, more elements, or less elements are also within the scope and idea of the present disclosure.

## Claims

1. An ion conductor comprising a plurality of cations, a plurality of anions, and vacancies in a crystal, wherein
among the plurality of anions, an anion having a largest isotropic atomic displacement parameter has an isotropic atomic displacement parameter of 2 Å² or more,
the plurality of cations includes conducting ions that are capable of migrating through the crystal and non-conducting ions that remain immobile in the crystal,
at each of conduction sites through which the plurality of cations migrates, at least one of the conducting ions, the non-conducting ions, and the vacancies is present,
a sum of occupancies of the conducting ions, the non-conducting ions, and the vacancies at the conduction sites is 100%, and
at the conduction sites, the occupancy of the conducting ions is within a range of 10% to 70%, the occupancy of the non-conducting ions is within a range of 10% to 50%, and the occupancy of the vacancies is within a range of 8% to 50%.

2. The ion conductor according to claim 1, wherein
among the plurality of anions, the anion having the largest isotropic atomic displacement parameter has an isotropic atomic displacement parameter of 5 Å² or more.

3. The ion conductor according to claim 1, wherein
in the plurality of anions, a ratio of the isotropic atomic displacement parameter of the anion having the largest isotropic atomic displacement parameter to an isotropic atomic displacement parameter of an anion having a smallest isotropic atomic displacement parameter is 4 or more.

4. The ion conductor according to claim 1, wherein
elements constituting the plurality of anions include at least one selected from a group consisting of O, F, Cl, Br, I, S, OH, and P.

5. The ion conductor according to claim 1, wherein
elements constituting the conducting ions include at least one selected from a group consisting of Li, Na, K, Rb, Cs, Mg, and H.

6. The ion conductor according to claim 1, wherein
the ion conductor has a pyrochlore-type crystal structure.

7. A secondary battery comprising:
a solid electrolyte (15) for the secondary battery including the ion conductor according to any one of claims 1 to 6; and
a positive electrode (14) and a negative electrode (12) provided to sandwich the solid electrolyte for the secondary battery.

8. A method for manufacturing the ion conductor according to any one of claims 1 to 6, in which the conducting ions are alkali metal cations, the method comprising:
a mixing process (S30) of mixing a composite oxide containing at least cations other than the alkali metal cations with an alkali metal compound containing the alkali metal cations; and
a firing process (S40) of heating a mixture containing the composite oxide and the alkali metal compound at a predetermined temperature to produce a pyrochlore-type oxide, wherein
in a case where the composite oxide contains the alkali metal cations, a composition ratio of the alkali metal cations in the composite oxide is less than a composition ratio of the alkali metal cations in the alkali metal compound,
the mixture contains the alkali metal compound in an amount exceeding a stoichiometric ratio relative to the pyrochlore-type oxide, and
in the firing process, the alkali metal compound is liquefied by heating at the predetermined temperature.
